# EUROPEAN PATENT APPLICATION

(11) **EP 4 787 516 A1**
(43) Date of publication of application: **05.08.2026**
(21) Application number: 25867196.5
(22) Date of filing: 20.11.2025
(51) Int. Cl.: H01M 10/04

(54) **CYLINDRICAL-BATTERY-CELL PROCESSING APPARATUS AND CYLINDRICAL-BATTERY-CELL PROCESSING METHOD USING SAME**

(30) Priority: 03.12.2024 KR 20240177693
(71) Applicant: LG ENERGY SOLUTION, LTD., Seoul 07335 (KR)
(72) Inventor: The designation of the inventor has not yet been filed
(74) Representative: Goddar, Heinz J.
(86) International application number: PCT/KR2025/019353
(87) International publication number: WO 2026/121651

(57) **Abstract**

Disclosed are a cylindrical battery cell machining apparatus including a compression unit configured to press an upper part of a cylindrical battery cell to reduce the outer diameter thereof and a fixing unit located under the compression unit, the fixing unit being configured to allow the compression unit to be mounted thereto, wherein the compression unit includes a plurality of separable units coupled to each other such that slits are formed therebetween, an elastic member is added to each of the slits, and the plurality of separable units is interconnected via the elastic members, and a cylindrical battery cell machining method using the same.

## Description

### [Technical Field]

This application claims the benefit of priority to Korean Patent Application No. 10-2024-0177693 filed on December 3, 2024, the disclosure of which is incorporated herein by reference in its entirety.

The present invention relates to a cylindrical battery cell machining apparatus and a cylindrical battery cell machining method using the same. More particularly, the present invention relates to a cylindrical battery cell machining apparatus capable of compressing a cylindrical battery cell to reduce the outer diameter thereof, thereby improving space utilization in a battery pack including a plurality of cylindrical battery cells, and a cylindrical battery cell machining method using the same.

### [Background Art]

Lithium secondary batteries, which are charged and discharged by the migration of lithium ions, are used not only for small battery cells used in mobile devices and small electronic products due to high energy density and high charging voltage but also for medium and large battery packs used as energy sources for electric vehicles and energy storage systems that require high power and high voltage.

Based on the shape of a battery case, the lithium secondary batteries are classified into a cylindrical battery cell having an electrode assembly mounted in a cylindrical metal can, a prismatic battery cell having an electrode assembly mounted in a prismatic metal can, and a pouch-shaped battery cell having an electrode assembly mounted in a pouch-shaped case made of an aluminum laminate sheet. Thereamong, the cylindrical battery cell has advantages of relatively large capacity and structural safety.

Cylindrical battery cells are manufactured with standardized height and diameter specifications. When a plurality of cylindrical battery cells is disposed in tight contact with each other, space utilization may be reduced if the diameter of an upper end of a battery can is large. Particularly, during a top-down pressing process performed to ensure uniform height of cylindrical battery cases, the diameter of an upper part of a beading portion may be increased. For this reason, a diameter equalization process is performed after the height equalization process.

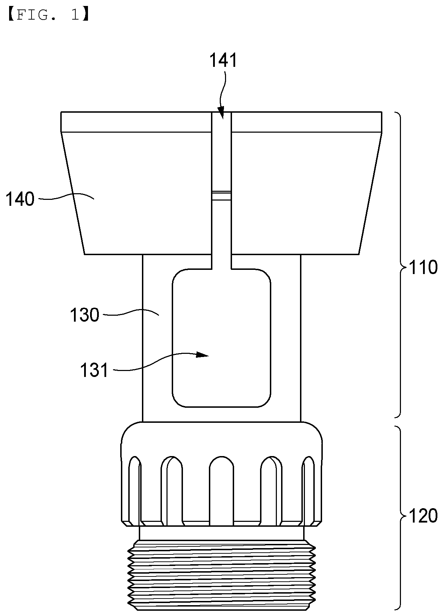

In this regard, FIG. 1 is a front view of a conventional cylindrical battery cell machining apparatus.

Referring to FIG. 1, the conventional cylindrical battery cell machining apparatus includes a fixing unit 120 located at a lower end thereof, the diameter of the fixing unit being uniform, a compression unit 110 configured to be pressed in a central direction to reduce the diameter of the cylindrical battery cell, and a connection unit 130 configured to connect the fixing unit 120 and the compression unit 110 to each other, the connection unit having a plurality of punched portions 131 formed therein, the connection unit being freely movable in a radial direction.

A cylindrical battery cell may be disposed such that a top cap faces downward, a beading portion may be fixed in an upper end of the compression unit 110, and the compression unit 110 may be pressed in a central direction to reduce the diameter of the cylindrical battery cell.

The compression unit 110 includes a plurality of shaping units 140 divided by slits 141. When the compression unit 110 moves in the central direction to press the cylindrical battery cell, the slits 141 between the shaping units 140 become narrow. As the cylindrical battery cell is pushed into the slits 141, external defects may occur.

The conventional cylindrical battery cell machining apparatus is manufactured by heat-treating all of the compression unit 110, the fixing unit 120, and the connection unit 130 and mounting the same to a pressing member, etc., so as to press cylindrical battery cells. During a process of simultaneously heat-treating the entire compression unit 110, partial machining deviations may occur in the compression unit 110, which is divided by the slits 141 and the punched portions 131. When pressing the battery cell, therefore, wear on the compression unit 110 in a specific direction may increase, whereby the impact load on that compression unit 110 increases. This may lead to accelerated wear of the pressing member in a specific direction, potentially reducing the service life of the pressing member.

In this regard, Patent Document 1 relates to a cylindrical battery case machining apparatus and a cylindrical battery cell manufacturing method using the same, wherein the distance between an inner surface of a cylindrical battery case and a jelly-roll type electrode assembly is monitored in order to minimize the distance while a side surface of the cylindrical battery case is pressed using a pressing jig.

In Patent Document 1, the distance between the inner surface of a cylindrical battery case and the jelly-roll type electrode assembly is minimized prior to a step of mounting a cap assembly to a cylindrical battery cell and sealing the cylindrical battery cell. However, Patent Document 1 does not suggest a method of preventing external defects of the cylindrical battery cell during the process of reducing the inner diameter of the cylindrical battery case after assembly of the cylindrical battery cell is completed.

Therefore, there is a need for technology capable of solving the problem of external deformation or wrinkling of a cylindrical battery cell during an outer diameter reduction process after assembly of the cylindrical battery cell.

### (Prior Art Document)

(Patent Document 1) Korean Patent Application Publication No. 2023-0067936 (2023.05.17)

### [Disclosure]

### [Technical Problem]

The present invention has been made in view of the above problems, and it is an object of the present invention to provide a cylindrical battery cell machining apparatus capable of preventing damage to a cylindrical battery cell during a process of pressing an upper part of the cylindrical battery cell to reduce the outer diameter of the cylindrical battery cell and a cylindrical battery cell machining method using the same.

### [Technical Solution]

A cylindrical battery cell machining apparatus according to the present invention to accomplish the above object includes a compression unit configured to press an upper part of a cylindrical battery cell to reduce the outer diameter thereof and a fixing unit located under the compression unit, the fixing unit being configured to allow the compression unit to be mounted thereto, wherein the compression unit includes a plurality of separable units coupled to each other such that slits are formed therebetween, an elastic member is added to each of the slits, and the plurality of separable units is interconnected via the elastic members.

In the cylindrical battery cell machining apparatus according to the present invention, the separable units may include a first unit, a second unit, and a third unit.

In the cylindrical battery cell machining apparatus according to the present invention, a lower part of each of the first unit, the second unit, and the third unit may be mounted to an upper part of the fixing unit by interlocking connection.

In the cylindrical battery cell machining apparatus according to the present invention, the compression unit may press the cylindrical battery cell while the inner diameter of the compression unit is reduced by external force, and when the inner diameter of the compression unit is reduced by the external force, the compression unit may slide in a central direction from a contact surface with the fixing unit.

In the cylindrical battery cell machining apparatus according to the present invention, the elastic members may contract when the inner diameter of the compression member is reduced.

The cylindrical battery cell machining apparatus according to the present invention may further include a pressing member having an internal space, the pressing member being configured to mount the compression unit and the fixing unit in the internal space.

In the cylindrical battery cell machining apparatus according to the present invention, the fixing unit may be inserted into and fixed in the internal space of the pressing member, a recess may be formed in an upper end of the fixing unit, and a protrusion formed on a lower end of the compression unit may be inserted into and fixed in the recess.

In the cylindrical battery cell machining apparatus according to the present invention, the pressing member may press the compression unit in the central direction such that the inner diameter of the compression unit is reduced.

The cylindrical battery cell machining apparatus according to the present invention may further include a contour jig configured to allow the pressing member having the compression unit and the fixing unit received therein to be mounted thereto.

In the cylindrical battery cell machining apparatus according to the present invention, a cylinder may be coupled through the contour jig so as to communicate with the pressing member, and the cylinder may press the pressing member such that the inner diameter of the pressing member is reduced while the pressing member moves in the central direction.

The cylindrical battery cell machining apparatus according to the present invention may further include a battery cell jig configured to receive the cylindrical battery cell in a reversed position and to insert an upper part of the cylindrical battery cell into the compression unit.

A cylindrical battery cell machining method using a cylindrical battery cell machining apparatus according to the present invention includes a first step of heat-treating a plurality of separable units in a separated state, a second step of mounting the plurality of separable units to a fixing unit so as to be assembled, a third step of adding elastic members to slits formed between the plurality of separable units to prepare a compression unit, a fourth step of inserting the compression unit and the fixing unit into a pressing member, a fifth step of disposing the pressing member of the fourth step in a contour jig, a sixth step of inserting a cylindrical battery cell into a battery cell jig and inserting the same into the compression unit, and a seventh step of pressing the pressing member in a central direction such that the compression unit presses the cylindrical battery cell.

In the cylindrical battery cell machining method according to the present invention, the third step may include a process of fusing the elastic members to the slits.

In addition, the present invention may provide various combinations of the above solving means.

### [Advantageous Effects]

According to the present invention, it is possible to prevent damage to an upper part of a cylindrical battery cell during a process of compressing the upper part of the cylindrical battery cell to reduce the diameter of the upper part of the cylindrical battery cell after assembly of the cylindrical battery cell.

In addition, a uniformly heat-treated compression unit is used, and therefore it is possible to prevent excessive wear of a pressing member in a specific direction during a process of compressing the cylindrical battery cell, thereby extending the service life of the pressing member.

### [Description of Drawings]

FIG. 1 is a front view of a conventional cylindrical battery cell machining apparatus.
FIG. 2 is a perspective view of a cylindrical battery cell machining apparatus according to the present invention.
FIG. 3 is an exploded view of separable units of the cylindrical battery cell machining apparatus of FIG. 2.
FIG. 4 is a plan view showing the state in which a pressing member is added to the cylindrical battery cell machining apparatus of FIG. 2.
FIG. 5 is a vertical sectional view of FIG. 4.
FIG. 6 is a perspective view showing the state in which a contour jig is added to the cylindrical battery cell machining apparatus of FIG. 4.
FIG. 7 is a perspective view showing the state in which a battery cell jig is added to the cylindrical battery cell machining apparatus of FIG. 6.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in more detail with reference to the drawings.

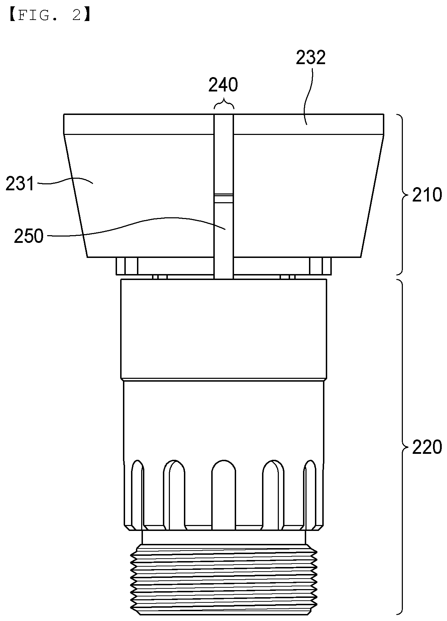

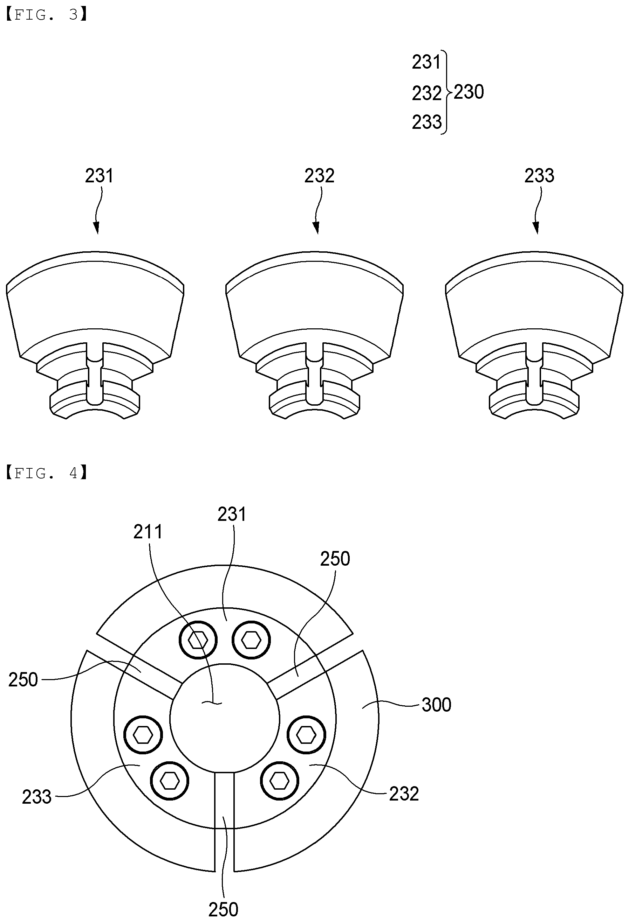

FIG. 2 is a perspective view of a cylindrical battery cell machining apparatus according to the present invention, and FIG. 3 is an exploded view of separable units of the cylindrical battery cell machining apparatus of FIG. 2.

Referring to FIGs. 2 and 3, the cylindrical battery cell machining apparatus according to the present invention includes a compression unit 210 configured to press an upper part of a cylindrical battery cell to reduce the outer diameter thereof and a fixing unit 220 located under the compression unit 210, the fixing unit being configured to allow the compression unit 210 to be mounted thereto.

The compression unit 210 includes a shaping unit 230 including a plurality of separable units located so as to be movable in a central direction and elastic members 250 interposed between the plurality of separable units. Specifically, in the compression unit 210, the plurality of separable units is coupled to each other such that slits 240 are formed therebetween, the elastic members 250 are added to the slits 240, and the plurality of separable units is interconnected via the elastic members 250 to form an integrated structure.

During mass production of cylindrical battery cells, wear of the cylindrical battery cell machining apparatus inevitably occurs. In order to minimize this, a heat treatment process is performed to adjust physical properties of a die, such as hardness and strength during a cylindrical battery cell manufacturing process.

Conventionally, when the compression unit 210 is formed in an integrated structure, as shown in FIG. 1, the entirety of the compression unit 210 must undergo heat treatment. If machining deviations occur between the shaping units 140 separated by the slits 141 during the heat treatment process, additional machining is difficult. In order to solve this problem, in the present invention, the shaping unit 140 is configured to include a plurality of separable units, and heat treatment is performed in the state in which the separable units are separated. Therefore, even if machining deviations occur between the separable units, additional machining is easy, allowing the machining deviations between the separable units to be reduced.

As shown in FIG. 3, the separable units constituting the shaping unit 230 include a first unit 231, a second unit 232, and a third unit 233, wherein a lower part of each of the first unit 231, the second unit 232, and the third unit 233 is mounted to an upper part of the fixing unit 220 by interlocking connection.

The first unit 231, the second unit 232, and the third unit 233 are mounted to the fixing unit 220 such that a hollow space is formed in a central portion thereof, and the first unit 231, the second unit 232, and the third unit 233 are disposed spaced apart from each other. That is, the slits 240 are formed between neighboring ones of the first unit 231, the second unit 232, and the third unit 233, and the elastic member 250, such as rubber, is fused into each of the slits 240, whereby the first unit 231, the second unit 232, and the third unit 233 are fixed in position to constitute the compression unit 210.

When external force is applied to the compression unit 210, the inner diameter of the compression unit 210 is reduced, whereby the cylindrical battery cell is pressed, and therefore the diameter of the cylindrical battery cell is reduced.

In the present invention, the slits are formed between the compression units 210, and the elastic member 250, such as rubber, is fused to each of the slits. Therefore, when the inner diameter of the compression unit 210 is reduced, the elastic member 250 contracts but is not detached from the slit 240. As a result, it is possible to prevent deformation of the cylindrical battery case upon insertion thereof into the slits 240 by the provision of the elastic members 250.

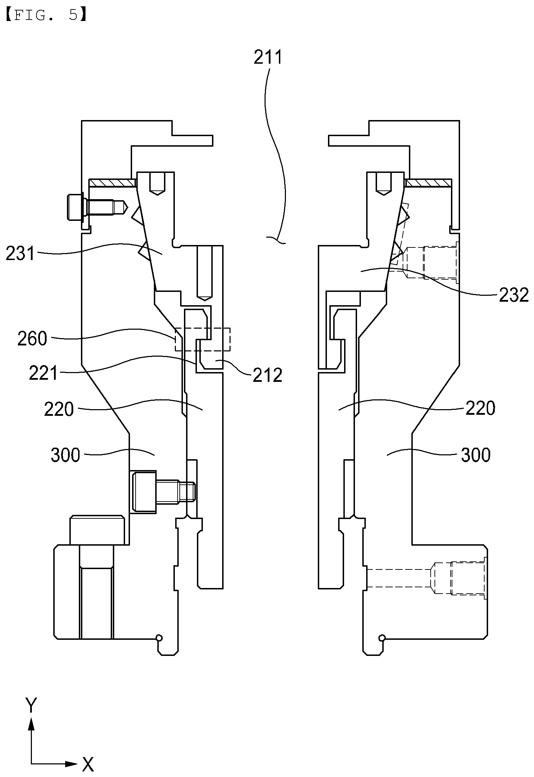

FIG. 4 is a plan view showing the state in which a pressing member is added to the cylindrical battery cell machining apparatus of FIG. 2, and FIG. 5 is a vertical sectional view of FIG. 4.

Referring to FIGs. 4 and 5 together with FIG. 2, the cylindrical battery cell machining apparatus according to the present invention further includes a pressing member 300 having an internal space 211, the pressing member being configured to mount the compression unit 210 and the fixing unit 220 in the internal space 211.

For example, after the shaping unit 230 is coupled to the fixing unit 220, the elastic members 250 are added to the shaping unit 230 to form the compression unit 210, the compression unit 210 and the fixing unit 220 may move downward together in a Y-axis direction and be inserted into and fixed in the internal space 211 of the pressing member 300. Alternatively, the fixing unit 220 may first move downward in the Y-axis direction and be inserted into and fixed in the internal space 211 of the pressing member 300, the shaping unit 230 may move downward in the Y-axis direction and be coupled to the fixing unit 220, and the elastic members 250 may be added to the slits of the shaping unit 230.

Specifically, the fixing unit 220 is inserted into and fixed in the internal space 211 of the pressing member 300, a recess 221 is formed in an upper end of the fixing unit 220, and a protrusion 212 formed on a lower end of the compression unit 210 is inserted into and fixed in the recess 221.

When external force is applied to the pressing member 300 to reduce the diameter of the cylindrical battery cell in the state in which the cylindrical battery cell is disposed on the compression unit 210, the compression unit 210 moves toward the internal space 211 due to the applied external force. At this time, the inner diameter of the compression unit 210 is reduced, and therefore the compression unit 210 may slide in a direction X toward the center of the internal space 211 from a contact surface 260 with the fixing unit 220.

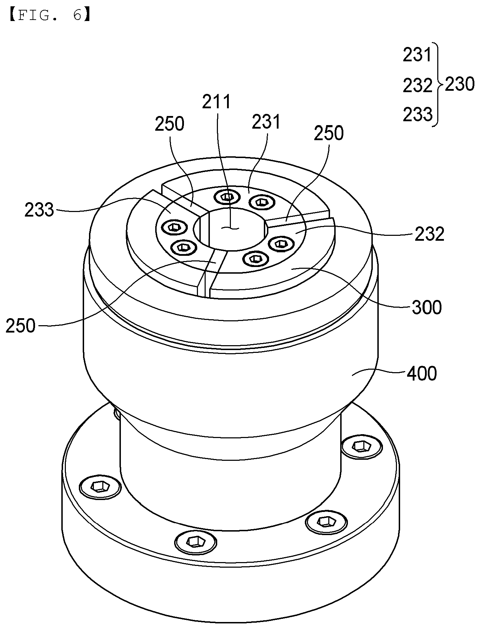

FIG. 6 is a perspective view showing the state in which a contour jig is added to the cylindrical battery cell machining apparatus of FIG. 4.

Referring to FIG. 6 together with FIG. 2, the cylindrical battery cell machining apparatus further includes a contour jig 400 configured to allow the pressing member 300 having the compression unit 210 and the fixing unit 220 received therein to be mounted thereto.

A cylinder (not shown) is coupled through the contour jig 400 so as to communicate with the pressing member 300, and the cylinder may press the pressing member 300 such that the inner diameter of the pressing member 300 is reduced while the pressing member moves in a direction toward the center of the internal space 211. The cylinder may be, for example, a pneumatic cylinder.

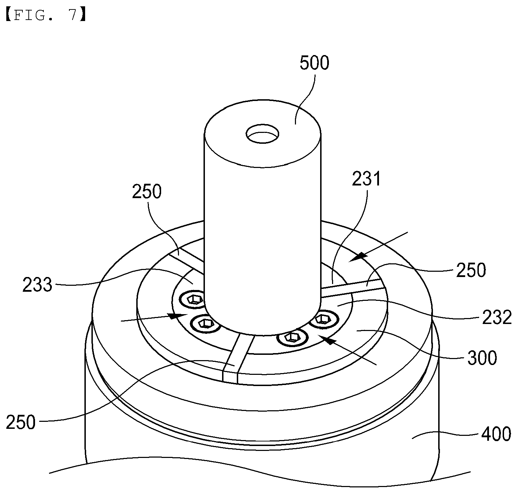

FIG. 7 is a perspective view showing the state in which a battery cell jig is added to the cylindrical battery cell machining apparatus of FIG. 6.

Referring to FIG. 7, the battery cell jig receives the cylindrical battery cell in a reversed position such that the top cap faces downward. The battery cell jig having the cylindrical battery cell received therein is disposed above the compression unit 210 including the first unit 231, the second unit 232, and the third unit 233, and the elastic members 250 interposed therebetween, and only an upper part of the cylindrical battery cell is inserted into the compression unit 210. At this time, a gripper (not shown) configured to hold the battery cell may be operated to prevent the battery cell from dropping.

In this state, the pressing member 300 is pressed in a central direction shown by the arrow to reduce the diameter of the upper part of the cylindrical battery cell.

A cylindrical battery cell machining method according to the present invention includes a first step of heat-treating a plurality of separable units in a separated state, a second step of mounting the plurality of separable units to a fixing unit so as to be assembled, a third step of adding elastic members to slits formed between the plurality of separable units to prepare a compression unit, a fourth step of inserting the compression unit and the fixing unit into a pressing member, a fifth step of disposing the pressing member of the fourth step in a contour jig, a sixth step of inserting a cylindrical battery cell into a battery cell jig and inserting the same into the compression unit, and a seventh step of pressing the pressing member in a central direction such that the compression unit presses the cylindrical battery cell.

The third step includes a process of fusing an elastic member 250 to each of the slits, and it is possible to prevent the cylindrical battery cell from being pushed into the slits due to the elastic members 250 added to the slits. In addition, when pressure is applied to the cylindrical battery cell, the elastic members 250 contract, whereby the diameter of the compression unit 210 may be reduced.

Those skilled in the art to which the present invention pertains will appreciate that various applications and modifications are possible within the scope of the present invention based on the above description.

### (Description of Reference Numerals)

- 110, 210:: Compression unit
- 120, 220:: Fixing unit
- 130:: Connection unit
- 131:: Punched portion
- 140, 230:: Shaping unit
- 141, 240:: Slit
- 211:: Space
- 212:: Protrusion
- 221:: Recess
- 231:: First unit
- 232:: Second unit
- 233:: Third unit
- 250:: Elastic member
- 260:: Contact surface
- 300:: Pressing member
- 400:: Contour jig

## Claims

1. A cylindrical battery cell machining apparatus comprising:
a compression unit configured to press an upper part of a cylindrical battery cell to reduce an outer diameter thereof; and
a fixing unit located under the compression unit, the fixing unit being configured to allow the compression unit to be mounted thereto, wherein
the compression unit comprises a plurality of separable units coupled to each other such that slits are formed therebetween, an elastic member is added to each of the slits, and the plurality of separable units is interconnected via the elastic members.

2. The cylindrical battery cell machining apparatus according to claim 1, wherein the separable units comprise a first unit, a second unit, and a third unit.

3. The cylindrical battery cell machining apparatus according to claim 2, wherein a lower part of each of the first unit, the second unit, and the third unit is mounted to an upper part of the fixing unit by interlocking connection.

4. The cylindrical battery cell machining apparatus according to claim 1, wherein
the compression unit presses the cylindrical battery cell while an inner diameter of the compression unit is reduced by external force, and
when the inner diameter of the compression unit is reduced by the external force, the compression unit slides in a central direction from a contact surface with the fixing unit.

5. The cylindrical battery cell machining apparatus according to claim 4, wherein the elastic members contract when the inner diameter of the compression member is reduced.

6. The cylindrical battery cell machining apparatus according to claim 1, further comprising a pressing member having an internal space, the pressing member being configured to mount the compression unit and the fixing unit in the internal space.

7. The cylindrical battery cell machining apparatus according to claim 6, wherein
the fixing unit is inserted into and fixed in the internal space of the pressing member,
a recess is formed in an upper end of the fixing unit, and
a protrusion formed on a lower end of the compression unit is inserted into and fixed in the recess.

8. The cylindrical battery cell machining apparatus according to claim 6, wherein the pressing member presses the compression unit in a central direction such that an inner diameter of the compression unit is reduced.

9. The cylindrical battery cell machining apparatus according to claim 6, further comprising a contour jig configured to allow the pressing member having the compression unit and the fixing unit received therein to be mounted thereto.

10. The cylindrical battery cell machining apparatus according to claim 9, wherein
a cylinder is coupled through the contour jig so as to communicate with the pressing member, and
the cylinder presses the pressing member such that an inner diameter of the pressing member is reduced while the pressing member moves in a central direction.

11. The cylindrical battery cell machining apparatus according to claim 1, further comprising a battery cell jig configured to receive the cylindrical battery cell in a reversed position and to insert an upper part of the cylindrical battery cell into the compression unit.

12. A cylindrical battery cell machining method using the cylindrical battery cell machining apparatus according to any one of claims 1 to 11, the cylindrical battery cell machining method comprising:
a first step of heat-treating a plurality of separable units in a separated state;
a second step of mounting the plurality of separable units to a fixing unit so as to be assembled;
a third step of adding elastic members to slits formed between the plurality of separable units to prepare a compression unit;
a fourth step of inserting the compression unit and the fixing unit into a pressing member;
a fifth step of disposing the pressing member of the fourth step in a contour jig;
a sixth step of inserting a cylindrical battery cell into a battery cell jig and inserting the same into the compression unit; and
a seventh step of pressing the pressing member in a central direction such that the compression unit presses the cylindrical battery cell.

13. The cylindrical battery cell machining method according to claim 12, wherein the third step comprises a process of fusing the elastic members to the slits.
